# EUROPÄISCHE PATENTSCHRIFT

(11) **EP 3 218 620 B1**
(45) Veröffentlichungstag und Bekanntmachung des Hinweises auf die Patenterteilung: **15.07.2020**
(21) Anmeldenummer: 15771103.7
(22) Anmeldetag: 29.09.2015
(51) Int. Cl.: F16F 13/14

(54) **HYDROBUCHSE SOWIE FAHRZEUG MIT DERARTIGER HYDROBUCHSE**
HYDRAULIC BUSHING, AND VEHICLE COMPRISING SUCH A HYDRAULIC BUSHING
MANCHON HYDRAULIQUE AINSI QUE VÉHICULE PRÉSENTANT UN TEL MANCHON HYDRAULIQUE

(30) Priorität: 13.11.2014 DE 102014223230
(43) Veröffentlichungstag der Anmeldung: 20.09.2017
(73) Patentinhaber: ContiTech Vibration Control GmbH, 30165 Hannover (DE)
(72) Erfinder: BEBERMEIER, Jürgen, 30823 Garbsen (DE); KLETTKE, Michael, 30171 Hannover (DE)
(74) Vertreter: Finger, Karsten
(86) Internationale Anmeldenummer: PCT/EP2015/072306
(87) Internationale Veröffentlichungsnummer: WO 2016/074845

(56) Entgegenhaltungen:
- WO-A1-2012/002402
- DE-A1- 19 503 445
- DE-C1- 4 242 080

## Beschreibung

Die Erfindung betrifft eine Hydrobuchse, aufweisend einen zylindrischen, ersten Stützkörper, einen hohlzylindrischen, zweiten Stützkörper, der den ersten Stützkörper mit einem radialen Abstand umschließt, eine mit Hydraulikflüssigkeit gefüllte, erste Kammer, die zwischen dem ersten Stützkörper und dem zweiten Stützkörper angeordnet ist, eine mit Hydraulikflüssigkeit gefüllte, zweite Kammer, die zwischen dem ersten Stützkörper und dem zweiten Stützkörper angeordnet ist, einen Drosselkanal, der die erste Kammer flüssigkeitsleitend mit der zweiten Kammer verbindet, einen Federkörper, der zwei in Längsrichtung der Hydrobuchse voneinander beabstandete Ringabschnitte aufweist, die sich jeweils von dem ersten Stützkörper zu dem zweiten Stützkörper erstrecken, um die genannten Stützkörper aufeinander abzustützen, einem dem Federkörper zugeordneter, hohlzylindrischer Stützkäfig, der die Ringabschnitte des Federkörpers an ihren radial außenseitigen Enden miteinander verbindet, und zwei zur Trennung der Kammern ausgebildete Trennwände, die sich jeweils zwischen den Ringabschnitten des Federkörpers erstrecken.

Die Erfindung betrifft außerdem ein Kraftfahrzeug mit einer Karosserie, einer Radaufhängung, die mindestens einen Lenker umfasst, und einer Hydrobuchse, die eine lagernde Verbindung zwischen dem Lenker und der Karosserie bildet.

Hydrobuchsen sind grundsätzlich aus dem Stand der Technik bekannt. Sie dienen beispielsweise zur Lagerung von zwei zu verbindenden Bauteilen und/oder zur Dämpfung von in Radialrichtung der Hydrobuchse eingetragenen Lasten. Hydrobuchsen werden beispielsweise bei Kraftfahrzeugen an vielen Stellen verbaut. Hydrobuchsen werden, insbesondere je nach Anwendungszweck, auch als hydraulisch dämpfende Buchsenlager oder als Hydrolager in Form einer Buchse bezeichnet. Die Hydrobuchse hat eine zylindrische, insbesondere hohlzylindrische Form. Die zu übertragenden Kräfte werden dabei an dem ersten Stützkörper und dem zweiten Stützkörper eingetragen bzw. aufgenommen. Die Stützkörper dienen deshalb auch als Befestigungselemente, um die Hydrobuchse mit zwei Bauteilen zu verbinden, zwischen denen eine Lagerung ausgebildet werden soll. Der erste und der zweite Stützkörper sind deshalb vorzugsweise aus Metall oder einem anderen festen Material, wie beispielsweise einem Faserverbundwerkstoff. Durch die hohlzylindrische Ausgestaltung des zweiten Stützkörpers kann dieser über den ersten Stützkörper geschoben sein, so dass der zweite Stützkörper den ersten Stützkörper mit einem radialen Abstand umschließt. Zwischen dem ersten Stützkörper und dem zweiten Stützkörper bildet sich sodann ein Zylinderringsspalt aus.

In einer Ausgangsstellung können der erste Stützkörper und der zweite Stützkörper koaxial zueinander angeordnet sein. Um die beiden Stützkörper mit dem genannten radialen Abstand zueinander anzuordnen, ist ein, insbesondere mehrteiliger, Federkörper mit zwei in Längsrichtung der Hydrobuchse voneinander beanstandeten Ringabschnitten vorgesehen. Der Federkörper und/oder die Ringabschnitte sind vorzugsweise, zumindest anteilig, von einem Elastomer gebildet. Alternativ oder ergänzend können der Federkörper und/oder die Ringabschnitte von einem anderen, elastischen Werkstoff, zumindest anteilig, gebildet sein. Die Ringabschnitte des Federkörpers dienen als Tragfeder, um die beiden Stützkörper aufeinander abzustützen. Dazu erstreckt sich jeder der beiden Ringabschnitte von dem ersten Stützkörper zu einem Stützkäfig, der in einer vorteilhaften Ausgestaltung den Kontakt zu dem zweiten Stützkörper herstellt. Dabei soll dies ebenfalls als eine Erstreckung der Ringabschnitte zu dem zweiten Stützkörper verstanden werden. Die Ringabschnitte weisen also vorzugsweise eine zumindest im Wesentlichen radiale Erstreckungsrichtung auf. Für eine besonders einfache Montage ist es vorgesehen, dass der Federkörper mit dem ersten Stützkörper fest, insbesondere durch eine stoffschlüssige Verbindung, verbunden ist. Die radial innenseitigen Enden der Ringabschnitte sind in diesem Fall unmittelbar mit dem ersten Stützkörper verbunden, so dass sich die Ringabschnitte jeweils von dem ersten Stützkörper radial nach außen erstrecken. Außerdem kann ein dem Federkörper zugeordneter, hohlzylindrischer Rohrabschnitt vorgesehen, der die Ringabschnitte des Federkörpers an ihren radial innenseitigen Enden miteinander verbindet. Ein solcher Rohrabschnitt erhöht den Halt des Federkörpers auf dem ersten Stützkörper und stellt außerdem einen gewünschten Abstand zwischen den Ringabschnitten sicher.

Da die Ringabschnitte in Längsrichtung der Hydrobuchse voneinander beanstandet sind, ist ein hohlzylindrischer Stützkäfig vorgesehen, der die radial außenseitigen Enden der beiden Ringabschnitte miteinander verbindet. Ein derartiger Sturzkäfig kann beispielsweise durch zwei Befestigungsringe mit zwischen den Befestigungsringen verlaufenden Längsstreben ausgestaltet sein. Die Befestigungsringe werden jeweils über einen der Ringabschnitte des Federkörpers gelegt oder gespannt, so dass die Ringabschnitte in Längsrichtung der Hydrobuchse mittels der Längsstreben des Stützkäfigs stabilisiert sind. Alternative Ausgestaltungen des Stützkäfigs sind jedoch auch möglich und denkbar. Der Stützkäfig kann beispielsweise in die Enden der Ringabschnitte des Federkörpers einfassen. Mit einem Ende eines Ringabschnitts ist also vorzugsweise ein Bereich am radialen Ende des Ringabschnitts zu verstehen. Der Stützkäfig muss also nicht notwendigerweise radial außenseitig auf den Ringabschnitten des Federkörpers aufliegen. Insbesondere kann sich der Käfig durch Elemente auszeichnen, dies sich in Längsrichtung zwischen den Ringabschnitten erstrecken.

Um eine Dämpfungswirkung bei in Radialrichtung der Hydrobuchse eintragenden Lasten auf die Stützkörper zu gewährleisten, ist es vorgesehen, dass eine erste Kammer und eine zweite Kammer in einem Ringspalt angeordnet sind, der von dem ersten Stützkörper, dem zweiten Stützkörper und den Ringabschnitten des Federkörpers begrenzt ist. Die erste Kammer und die zweite Kammer sind also jeweils zwischen dem ersten Stützkörper und dem zweiten Stützkörper angeordnet. Außerdem sind die beiden Kammer jeweils mit einer Hydraulikflüssigkeit, insbesondere ein Gemisch aus Glykol und Wasser, gefüllt. Um ein Austausch von Hydraulikflüssigkeit zwischen den beiden Kammern zu gewährleisten, ist ein Drosselkanal vorgesehen, der die beiden Kammern flüssigkeitsleitend miteinander verbindet. Der Drosselkanal, und insbesondere der zugehörige Kanalquerschnitt und/oder die zugehörige Kanallänge, ist vorzugsweise dazu ausgebildet, dass bei einem Durchströmen von Hydraulikflüssigkeit Dissipation auftritt, so dass bei einem Austausch von Hydraulikflüssigkeit zwischen den Kammern mittels des Drosselkanals Dämpfungsarbeit entsteht.

Besonders bevorzugt sind die beiden Kammern jeweils zylinderringabschnittsförmig ausgebildet und in Umfangsrichtung der Hydrobuchse voneinander beabstandet. Außerdem sind zwei zur Trennung der Kammern ausgebildete, elastische Trennwände vorgesehen. Die Trennwände sind vorzugsweise aus einem Elastomer hergestellt. Die Trennwände erstrecken sich jeweils in Längsrichtung der Hydrobuchse zwischen den Ringabschnitten des Federkörpers. Bezüglich ihrer radialen Erstreckung ist es bevorzugt vorgesehen, dass jede Trennwand radial innenseitig mit einer ersten Längsseite an den ersten Stützkörper und/oder den Rohrabschnitt angrenzt. Dabei sind die Trennwände in Umfangsrichtung der Hydrobuchse voneinander beanstandet. Die Trennwände bilden deshalb jeweils einen begrenzenden Wandabschnitt der ersten Kammer und der zweiten Kammer. Treten nun von eingetragenen Lasten hervorgerufene, relative Bewegungen in Radialrichtung zwischen den Stützkörpern auf, erhöht sich der Druck der Hydraulikflüssigkeit in einer der Kammern wobei gleichzeitig der Druck in der anderen Kammer sinkt. Mit anderen Worten kommt es zu Druckunterschieden in den beiden Kammern, und zwar vorzugsweise durch Veränderung der jeweiligen Volumina. Dadurch wird ein Volumenstrom an Hydraulikflüssigkeit durch den Drosselkanal von der einen Kammer in die andere Kammer verursacht. Mit steigender relative Bewegung zwischen den Stützkörper, also insbesondere einer Schwingungsbewegung, strömt Hydraulikflüssigkeit durch den Drosselkanal zwischen den beiden Kammern hin und her. Der Drosselkanal erzeugt Dissipation und entsprechende Dämpfungsarbeit. Mit steigender Frequenz der Schwingungsbewegung wird ein Widerstand gegen den Austausch der Hydraulikflüssigkeit durch den Drosselkanal zwischen den Kammern größer. Deshalb erfolgt die Dämpfung mittels des Drosselkanals primär für niederfrequente Schwingungen, so beispielsweise in einem Bereich zwischen 5 Hz bis 15 Hz. Der Widerstand erhöht sich mit steigender Frequenz bis zu einem annähernd vollständigen Blockieren des Austausches von Hydraulikflüssigkeit ab einer bestimmten Grenzfrequenz. Mit Erreichen der Grenzfrequenz entstehen sehr große Drücke in den Kammern. Um einer entsprechend hohen Belastung standhalten zu können, werden im Stand der Technik die Trennwände mit großen Wandstärken vorgeschlagen. Die aus dem Stand der Technik bekannten Trennwände erstrecken sich in Radialrichtung zwischen dem ersten Stützkörper und dem zweiten Stützkörper. Der radiale Abstand zwischen den beiden Stützkörpern ist aber für gewöhnlich klein, so dass die Trennwände bei dem Auftreten der genannten, großen Drücke in den Kammern kaum bis gar nicht elastisch verformbar sind. Vielmehr behalten die Trennwände ihre Form annähernd bei. Eine derartige Hydrobuchse weist deshalb eine nachteilige, hohe dynamische Steifigkeit auf. Ziel ist es jedoch, die Trennwände derart auszugestalten, dass es bei höherfrequenten Schwingungen, so beispielsweise in einem Bereich zwischen 15 Hz und 200 Hz, zu einer elastischen Verformung der Trennwände kommt, so dass zu den anregenden Schwingungen gegenphasige Schwingungen angeregt werden, die zu einer gegenseitigen Isolation, zumindest anteilig, führen. Bei der Verwendung der Hydrobuchse für ein Kraftfahrzeug kann es beispielsweise vorgesehen sein, ein derartiges Isolationsverhalten zur Isolation von Leerlaufschwingungen des Motors zu verwenden. Um die Verformbarkeit der Trennwände zu erreichen, könnte zwar die jeweilige Wandstärke der Trennwände reduziert werden. Dies würde jedoch die Lebensdauer der Trennwände stark reduzieren, da diese sodann bei dem Auftreten der genannten, großen Drücke stark beulenförmig verformt werden, was zu vermeiden ist. Diese beulenförmigen oder blasenförmigen Verformungen verursachen hohe Zugspannungen innerhalb der Trennwände, was zu einer schnellen Alterung der Trennwände führt. Die Lebensdauer der Trennwände sinkt mit einer derartigen Verformung deutlich.

Die DE 42 42 080 C1 beschreibt ein flüssigkeitsgefülltes Buchsenlager mit einer hydraulischen Dämpfungseinrichtung und zwei einander umschließenden Beschlagteilen, die durch einen Federkörper aus elastomerem Werkstoff verbunden sind. Zwischen den beiden in Bewegungsrichtung hintereinanderliegenden flüssigkeitsgefüllten Kammern ist zumindest eine bewegliche Trennwand angeordnet. Zumindest eines der Beschlagteile weist einen Spalt auf, der sich im Wesentlichen parallel zur Bewegungsrichtung erstreckt und in Richtung zumindest einer der beiden Kammern geöffnet ist. Die Trennwand besteht aus einem elastomeren Werkstoff und verbindet im Bereich ihrer Enden durch ein rollbalgartig ausgebildetes Profil die den Spalt begrenzenden Flächen miteinander. Die Trennwand erstreckt sich nur innerhalb des Spalts, der durch die Flächen des inneren Beschlagteils begrenzt ist. Hierbei ist von Vorteil, dass selbst bei stoßartigen Belastungen und dadurch entstehenden Druckspitzen innerhalb der Kammern eine unerwünscht große Verformung der Trennwand zuverlässig verhindert wird.

Der Erfindung liegt die Aufgabe zugrunde, eine Hydrobuchse bereitzustellen, die sowohl zur Dämpfung von Schwingungen in einem ersten Frequenzbereich, insbesondere im Bereich niederfrequenter Schwingungen, als auch zur Isolation von Schwingungen in einem zweiten, höheren Frequenzbereich, insbesondere im Bereich höherfrequenter Schwingungen, ausgebildet ist, wobei eine möglichst hohe Lebensdauer der Hydrobuchse gewährleistet werden soll.

Gemäß einem ersten Aspekt wird die Aufgabe durch die Hydrobuchse gemäß Anspruch 1 gelöst. Vorgesehen ist also eine Hydrobuchse, aufweisend einen zylindrischen, ersten Stützkörper, einen hohlzylindrischen, zweiten Stützkörper, der den ersten Stützkörper mit einem radialen Abstand umschließt, eine mit Hydraulikflüssigkeit gefüllte, erste Kammer, die zwischen dem ersten Stützkörper und dem zweiten Stützkörper angeordnet ist, eine mit Hydraulikflüssigkeit gefüllte, zweite Kammer, die zwischen dem ersten Stützkörper und dem zweiten Stützkörper angeordnet ist, einen Drosselkanal, der die erste Kammer flüssigkeitsleitend mit der zweiten Kammer verbindet, einen Federkörper, der zwei in Längsrichtung der Hydrobuchse voneinander beabstandete Ringabschnitte aufweist, die sich jeweils von dem ersten Stützkörper zu dem zweiten Stützkörper erstrecken, um die genannten Stützkörper aufeinander abzustützen, einem dem Federkörper zugeordneter, hohlzylindrischer Stützkäfig, der die Ringabschnitte des Federkörpers an ihren radial außenseitigen Enden miteinander verbindet, und zwei zur Trennung der Kammern ausgebildete Trennwände, die sich jeweils zwischen den Ringabschnitten des Federkörpers erstrecken, wobei sich die Trennwände jeweils zwischen dem ersten Stützkörper und dem Stützkäfig erstrecken, jede der Trennwände zwischen jeweils zwei sich in Radialrichtung der Hydrobuchse überlappenden Schlitzen angeordnet ist, wobei jeweils ein erster Schlitz der beiden Schlitze von der ersten Kammer und ein zweiter Schlitz der beiden Schlitze von der zweiten Kammer gebildet sind.

In Radialrichtung der Hydrobuchse ist zwischen dem ersten Stützkörper und dem Stützkäfig der Bereich mit der größten, freien Wegstrecke aufzufinden. Der Erfindung liegt deshalb der Gedanke zu Grunde, die Trennwände in diesem Bereich anzuordnen, um eine elastische Verformung der Trennwände zu erlauben. Wie in den vorangegangenen Abschnitten erläutert, ist es für die Trennwände notwendig, dass sie eine möglichst große Wandstärke aufweisen. Um die Trennwände dennoch elastisch verformbar auszugestalten, wobei die pro Flächenabschnitt gesehene Verformung der Trennwand möglichst gering ausfallen soll, ist es vorgesehen, dass sich die Trennwände nicht direkt in Radialrichtung der Hydrobuchse erstrecken. Vielmehr ist es vorgesehen, dass jede der Trennwände zwischen jeweils zwei sich in Radialrichtung der Hydrobuchse überlappenden Schlitzen angeordnet ist, wobei ein erster Schlitz der beiden Schlitze von der ersten Kammer und ein zweiter Schlitz der beiden Schlitze von der zweiten Kammer gebildet ist. In Radialrichtung betrachtet folgt auf den ersten Schlitz die Trennwand und auf die Trennwand der zweite Schlitz. Die beiden Schlitze und die Trennwand sind also in Radialrichtung der Hydrobuchse ebenfalls überlappend angeordnet. Daraus ergibt sich, dass die Trennwand zumindest einen Abschnitt aufweist, der schräg zu einer Radialrichtung ist, die zu dem ersten Schlitz und/oder zweiten Schlitz ausgerichtet ist. Mit anderen Worten kann jede der Trennwände zumindest einen Abschnitt aufweisen, der zumindest im Wesentlichen in Tangentialrichtung der Hydrobuchse oder in Umfangsrichtung der Hydrobuchse ausgerichtet ist. Der jeweilige Abschnitt der Trennwand kann besonders bevorzugt einen Ringabschnitt bilden, der koaxial zu dem ersten Stützkörper ausgestaltet ist.

Jede der Trennwände kann die notwendige Wandstärke aufweisen, um den Drücken in den Kammern bei höherfrequenten Schwingungen standzuhalten. Außerdem kann die gewünschte, elastische Verformbarkeit der Trennwände gewährleistet werden, um höherfrequente Schwingungen zu isolieren. Denn die Trennwände weisen jeweils aufgrund ihrer Ausrichtung, die nunmehr nicht direkt in Radialrichtung ist, eine höhere sich zwischen dem ersten Stützkörper und dem Stützkäfig erstreckenden Erstreckungsbreite auf, so dass sich die Trennwände bei höherfrequenten Schwingungen elastisch verbiegen können. Dies reduziert die dynamische Steifigkeit. Mit der Erstreckungsbreite einer Trennwand ist vorzugsweise eine Bogenlänge der Trennwand in zumindest etwa der Umfangsrichtung des Hydrolagers zu verstehen. Alternativ kann unter der Erstreckungsbreite einer Trennwand eine Ausdehnung der Trennwand in Tangentialrichtung der Hydrobuchse verstanden werden. Durch die genannte, elastische Verbiegung der Trennwände verringert sich die relative Dehnung der Trennwände, so dass die Lebensdauer der Trennwände erhalten bleibt oder sogar erhöht wird. Die erfindungsgemäße Hydrobuchse erlaubt also bei einem Aufrechterhalten der Lebensdauer eine Absenkung der dynamischen Steifigkeit, so dass die Hydrobuchse ausgebildet ist, niederfrequente Schwingungen mittels des Austausches von Hydraulikflüssigkeit zwischen den Kammern durch den Drosselkanal zu dämpfen und höherfrequente Schwingungen durch entsprechendes elastisches Verbiegen der Trennwand und einem korrespondierenden Anregen von gegenphasigen Schwingungen zu isolieren.

Eine vorteilhafte Ausgestaltung der Hydrobuchse zeichnet sich dadurch aus, dass jede der Trennwände Z-förmig oder S-förmig ausgestaltet ist. Eine Hydrobuchse weist zumeist eine Vorzugsrichtung auf, in der Kräfte in die Hydrobuchse eingeleitet werden können, wobei entsprechende relative Bewegungen zwischen dem ersten Stützkörper und dem zweiten Stützkörper gedämpft und/oder isoliert werden können. Die Vorzugsrichtung ist dabei vorzugsweise durch eine Achse bestimmt, die einen Mittelpunkt der ersten Kammer und eine Mittelpunkt der zweiten Kammer verbindet. Weist die Relativbewegung zwischen dem ersten Stützkörper und dem zweiten Stützkörper eine Querbewegungskomponente auf, die senkrecht zur Vorzugsrichtung ist, so kann die entsprechende, senkrechte Bewegungskomponente gedämpft und/oder isoliert werden, ohne die Trennwände kritisch zu belasten. Vielmehr werden die Trennwände durch die Querbewegungskomponente ebenfalls elastisch verformt. Die entsprechende Verformung je Längeneinheit kann durch konstruktive Anpassung der Erstreckungsbreite der Trennwände gering gehalten werden, was die Lebensdauer der Trennwände deutlich erhöht. Die Hydrobuchse weist damit ebenfalls eine hohe Lebensdauer auf.

Eine weitere vorteilhafte Ausgestaltung der Hydrobuchse zeichnet sich dadurch aus, dass die Trennwände von dem Federkörper gebildet sind. Grundsätzlich kann der Federkörper mehrteilig ausgebildet sein. Somit können die Trennwände jeweils einen Teil des Federkörpers bilden. Alternativ oder ergänzend können die Trennwände einen integralen Teil des Federkörpers bilden. Dies erlaubt die Übertragung von besonders hohen Kräften zwischen den Stützkörpern der Hydrobuchse. Außerdem ist ein derartiger Federkörper besonders einfach montierbar.

Eine weitere vorteilhafte Ausgestaltung der Hydrobuchse zeichnet sich dadurch aus, dass der Drosselkanal von dem Federkörper gebildet ist. Da der Federkörper an die Kammern der Hydrobuchse angrenzt, können der Drosselkanal und die zugehörigen Drosselkanaleingänge zu der ersten Kammer und der zweiten Kammer von dem Federkörper gebildet sein. Dies erleichtert die Herstellung und/oder die Montage der Hydrobuchse.

Eine weitere vorteilhafte Ausgestaltung der Hydrobuchse zeichnet sich dadurch aus, dass dem Federkörper zur Bildung des Drosselkanals ringabschnittsförmige Kanalelemente zugeordnet sind. Insbesondere sind zwei oder mehr, ringabschnittsförmige Kanalelemente vorgesehen. Die Kanalelemente können einen gemeinsamen, durchgängigen Drosselkanal bilden. Besonders bevorzugt sind zwei Kanalelemente vorgesehene, die mantelseitige Außenabschnitte des zylinderförmigen Federkörpers bilden. Insbesondere sind die Kanalelemente in Längsrichtung mittig angeordnet, so dass der Drosselkanal ebenfalls in Längsrichtung mittig angeordnet sein kann. Dabei kann der Drosselkanal durch mehrere, insbesondere parallel zueinander angeordnete, ringabschnittsförmige Kanäle gebildet sein. Da der Stützkäfig die radial außenseitigen Enden der Ringabschnitte des Federkörpers verbindet, kann es vorgesehen sein, dass die Kanalelemente an dem Stützkäfig befestigt sind oder an diesem formschlüssig anliegen. Dies erleichtert die Montage der Hydrobuchse, indem der Federkörper zusammen mit dem ersten Stützkörper in den zweiten Stützkörper eingesteckt wird, um nach einem reduzieren des Durchmessers des zweiten Stützkörper eine Kraft und/oder formschlüssige Verbindung zwischen dem zweiten Stützkörper und dem Federkörper zu schaffen.

Eine weitere vorteilhafte Ausgestaltung der Hydrobuchse zeichnet sich dadurch aus, dass der Stützkäfig die Kanalelemente bildet. Indem der Stützkäfig die Kanalelemente bildet, kann die Anzahl der Teile des Federkörpers reduziert werden, so dass die Montage des Federkörpers und/oder die Montage der Hydrobuchse vereinfacht wird.

Eine weitere vorteilhafte Ausgestaltung der Hydrobuchse zeichnet sich dadurch aus, dass für mindestens eine oder jede Trennwand ein Trennwandergänzungsabschnitt vorgesehen ist, der sich jeweils von der zugehörigen Trennwand an dem Stützkäfig zu dem zweiten Stützkörper erstreckt. Durch die jeweilige Trennwand mit dem daran angrenzenden Trennwandergänzungsabschnitt können Druckkräfte in Radialrichtung zwischen dem ersten Stützkörper und dem zweiten Stützkörper unmittelbar ausgeglichen werden. Dadurch werden die übrigen Bauteile einer geringeren Belastung ausgesetzt, so dass die Lebensdauer der Hydrobuchse erhöht wird. Mit dem Trennwandergänzungsabschnitt kann darüber hinaus eine verbesserte Abdichtung und/oder Trennung der ersten Kammer von der zweiten Kammer gewährleistet werden, insbesondere wenn die jeweilige Trennwand und der zugehörige Trennwandergänzungsabschnitt integral miteinander verbunden sind.

Eine weitere vorteilhafte Ausgestaltung der Hydrobuchse zeichnet sich dadurch aus, dass sich die Trennwände jeweils zwischen dem radial innenseitig an dem zweiten Stützkörper angeordneten Stützkäfig und einem radial außenseitig an dem ersten Stützkörper angeordneten Abschnitt des Federkörpers erstrecken. Der Federkörper ist bestimmungsgemäß mit dem ersten Stützkörper verbunden. Diese Verbindung ist vorzugsweise stoffschlüssig, kraftschlüssig und/oder formschlüssig. Es hat sich deshalb als vorteilhaft erwiesen, wenn die jeweilige Trennwand an den Abschnitt des Federkörpers grenzt, der mit dem ersten Stützkörper verbunden ist, um eine möglichst fluiddichte Verbindung zu schaffen. Ferner kann die Verbindung zwischen der jeweiligen Trennwand und dem genannten Abschnitt des Stützkörpers als stoffschlüssige Verbindung ausgebildet sein, die zur Übertragung von besonders hohen Kräften, insbesondere Querkräften und/oder zu Kräften, ausgebildet ist. Eine derartige Verbindung gewährleistet ebenfalls eine hohe Lebensdauer der Hydrobuchse. Indem der Stützkäfig radial innenseitige, insbesondere unmittelbar, an dem zweiten Stützkörper angeordnet ist, kann die freie Wegstrecke zwischen dem ersten Stützkörper und dem Stützkäfig besonders lang gewählt werden, was eine besonders hohe Erstreckungsbreite erlaubt. Dies gewährleistet eine besonders gute Isolationsfähigkeit von höherfrequenten Schwingungen mittels der Trennwand.

Eine weitere vorteilhafte Ausgestaltung der Hydrobuchse zeichnet sich dadurch aus, dass sich jede der Trennwände in Umfangsrichtung der Hydrobuchse über einen Winkel zwischen 15 Grad und 45 Grad erstreckt. So kann sich jede Trennwand beispielsweise über einen Umfangswinkel von 30 Grad erstrecken. Die jeweilige Trennwand weist sodann eine entsprechend hohe Erstreckungsbreite auf, die eine besonders gute Isolation von höherfrequenten Schwingungen ermöglicht. Dabei kann es vorgesehen sein, dass eine Wandstärke der Trennwand proportional mit der Erstreckung der Trennwand in Umfangsrichtung steigt. Bei einem Umfangswinkel von 30 Grad kann die Trennwand beispielsweise eine Wandstärke zwischen 2 mm und 7 mm, besonders bevorzugt zwischen 3 mm und 4 mm, aufweisen. Als besonders vorteilhaft hat sich erwiesen, wenn die Wandstärke der Trennwand zwischen 20 % und 70 %, besonders bevorzugt zwischen 30 % und 60 %, der Erstreckungsbreite beträgt. Mit den zuvor genannten Angaben bezüglich der Erstreckung der jeweiligen Trennwand in Umfangsrichtung und/oder der zugehörigen Wandstärke wurde in der Praxis festgestellt, dass die gewünschten Anforderungen an das Dämpfung- bzw. Isolationsverhalten und die Lebensdauererwartungen besonders gut erfüllbar sind.

Eine weitere vorteilhafte Ausgestaltung der Hydrobuchse zeichnet sich dadurch aus, dass ein erster Schlitz und ein zweiter Schlitz, zwischen denen eine Trennwand angeordnet ist, in Umfangsrichtung oder in Tangentialrichtung der Hydrobuchse über mindestens 25 % einer sich in der Umfangsrichtung bzw. in der Tangentialrichtung mit einer Erstreckungsbreite E erstreckenden Trennwand überlappend angeordnet sind. Weist die jeweilige Trennwand beispielsweise eine Erstreckungsbreite in Umfangsrichtung bzw. Tangentialrichtung von ca. 8 mm auf, so ist es bevorzugt vorgesehen, dass sich die beiden Schlitze, zwischen denen die genannte Trennwand angeordnet ist, über eine Länge von ca. 2 mm überlappen. Die Überlappung erfolgt dabei in Radialrichtung. Die sich hierzu senkrecht ausbildende Tangentialrichtung und/oder Umfangsrichtung bestimmt sodann die Länge der Überlappung, hier beispielsweise die genannten 2 mm. Mit der bevorzugten Überlappung von mindestens 25 % der beiden Schlitze, zwischen denen jeweils eine Trennwand angeordnet ist, wird gewährleistet, dass die Trennwand um die Längsachse der Hydrobuchse verbiegbar ist, so dass ein entsprechendes Isolationsverhalten von hochfrequenten Schwingungen ermöglicht wird und die Lebensdauer der Hydrobuchse besonders hoch ist.

Eine weitere vorteilhafte Ausgestaltung der Hydrobuchse zeichnet sich dadurch aus, dass jede der Trennwände in einem Winkel zwischen 50 Grad und 85 Grad zu einer sich in Längsrichtung erstreckenden, die jeweilige Trennwand schneidenden Querebene der Hydrobuchse ausgerichtet ist. Dies gewährleistet, dass die jeweilige Trennwand in einem Winkel zwischen 50 Grad und 85 Grad zu einer Radialrichtung ausgerichtet ist, der zu einem der Schlitze zeigte, zwischen denen die jeweilige Trennwand angeordnet ist. Die jeweilige Trennwand ist deshalb deutlich länger als der radiale Abstand zwischen dem ersten Stützkörper und dem Stützkäfig. Treten nun Druckschwankungen in den Kammern auf, kann sich die jeweilige Trennwand aufgrund ihrer hohen Trennwandbreite um die Längsachse der Hydrobuchse verbiegen, um die gewünschten gegenphasigen Schwingungen anzuregen, die zur Isolation der die Druckschwankung verursachenden Schwingungen dient.

Gemäß einem weiteren Aspekt wird die eingangs genannte Aufgabe außerdem durch ein Kraftfahrzeug gemäß Anspruch 12 gelöst. Vorgesehen ist also ein Kraftfahrzeug mit einer Karosserie, einer Radaufhängung, die mindestens einen Lenker umfasst, und einer erfindungsgemäßen Hydrobuchse, die eine lagernde Verbindung zwischen dem Lenker und der Karosserie bildet. Dabei gelten Merkmale, Details und Vorteile, die im Zusammenhang mit der erfindungsgemäßen Hydrobuchse beschrieben sind, selbstverständlich auch im Zusammenhang mit dem erfindungsgemäßen Kraftfahrzeug und jeweils umgekehrt, so dass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: die Hydrobuchse in einer schematischen Explosionsansicht,
- Fig. 2: die Hydrobuchse in einer weiteren, schematischen Explosionsansicht,
- Fig. 3: die Hydrobuchse in einer schematischen Perspektivansicht,
- Fig. 4: die Hydrobuchse in einer schematischen Längsschnittansicht, und
- Fig. 5: die Hydrobuchse in einer schematischen Querschnittsansicht.

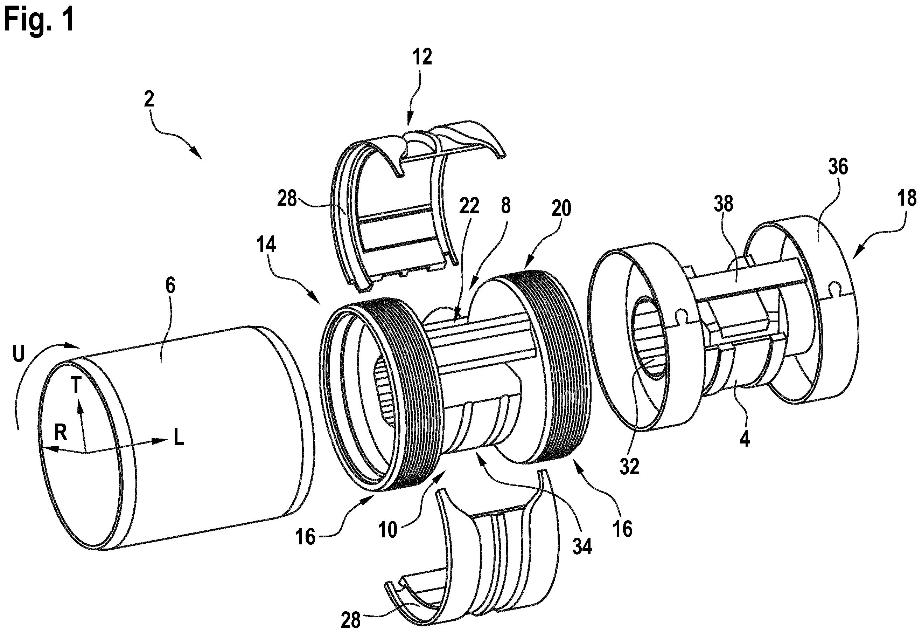

Aus der Figur 1 ist die Hydrobuchse 2 in einer schematischen Explosionsdarstellung zu erkennen. An der linken Seite der Figur 1 ist der zweite Stützkörper 6 dargestellt. Der zweite Stützkörper 6 weist eine hohlzylindrische Form auf. Der zweite Stützkörper 6 dient zur Aufnahme der übrigen Teile der Hydrobuchse 2. Diese sind zu der rechten Seite des zweiten Stützkörper 6 dargestellt.

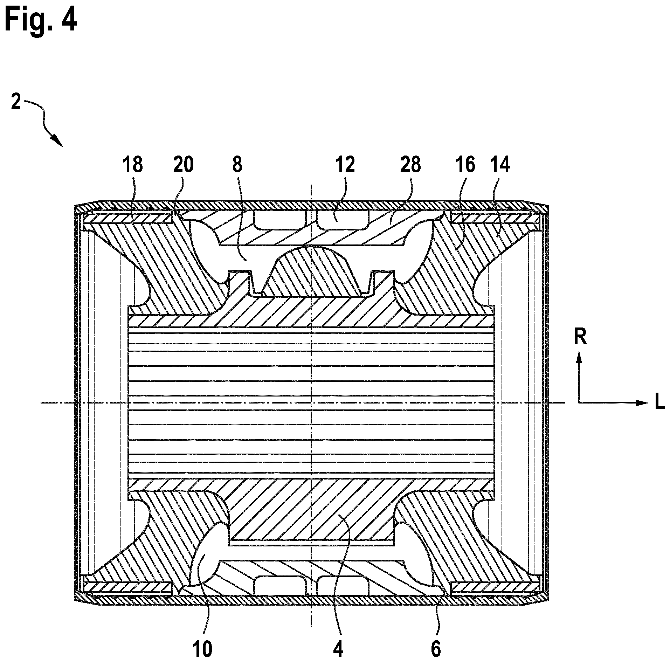

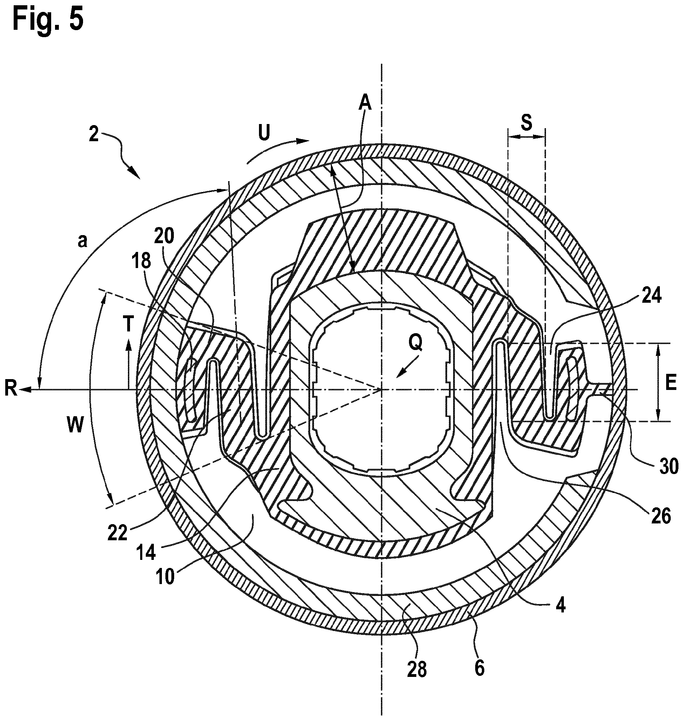

Die weiteren Erläuterungen beziehen sich auf eine Zusammenschau der Figuren 1 und 4. Die Hydrobuchse 2 dient zur Übertragung von Kräften in Radialrichtung R zwischen dem ersten Stützkörper 4 und dem zweiten Stützkörper 6. Analog zu dem zweiten Stützkörper 6 ist der erste Stützkörper 4 zylindrischen ausgestaltet. Wie aus der Figur 1 zu entnehmen ist, weist der erste Stützkörper 4 eine Bohrung 32 auf. Der erste Stützkörper 4 ist also ebenfalls hohlzylindrisch ausgestaltet. Damit der zweite Stützkörper 6 den ersten Stützkörper 4 mit einem radialen Abstand A, der der Figur 5 zu entnehmen ist, umschließt, sind der erste Stützkörper 4 und der zweite Stützkörper 6 zumindest für eine Ausgangsstellung koaxial zueinander anzuordnen. Um den radialen Abstand A zwischen dem ersten Stützkörper 4 und dem zweiten Stützkörper 6 zu gewährleisten, ist ein Federkörper 14 vorgesehen, der zwei in Längsrichtung L der Hydrobuchse 2 voneinander beanstandete Ringabschnitte 16 aufweist. Die Ringabschnitte 16 des Federkörpers 14 wirken als Tragfeder oder als Tragkörper zwischen dem ersten Stützkörper 4 und dem zweiten Stützkörper 6. Dazu erstrecken sich die Ringabschnitte 16 jeweils von dem ersten Stützkörper 4 zu dem zweiten Stützkörper 6. An ihren radial innenseitigen Enden werden die beiden Ringabschnitte 16 von einem rohrförmigen Abschnitt 34 des Federkörpers 14 miteinander verbunden. Der rohrförmige Abschnitt 34 des Federkörpers 14 wird unmittelbar mit dem ersten Stützkörper 4, und zwar an der zugehörigen Mantelseite, stoffschlüssig, formschlüssig und/oder kraftschlüssig verbunden. Somit besteht zwischen dem Federkörper 14 und dem ersten Stützkörper 4 eine stoffschlüssige, formschlüssige und/oder kraftschlüssige Verbindung.

Um die Stabilität des Federkörpers 14 zu erhöhen, ist ein Stützkäfig 18 vorgesehen. Der Stützkäfig 18 weist zwei in Längsrichtung L voneinander beanstandete Ringelemente 36 auf, die durch mindestens ein sich in Längsrichtung L erstreckendes Längsverbindungselement 38 verbunden sind. Der Stützkäfig 18 kann einstückig oder mehrstückig ausgebildet sein. Darüber hinaus ist es vorgesehen, dass der Stützkäfig 18 dem Federkörper 14 zugeordnet ist. Denn der Stützkäfig 18 umschließt mit seinen beiden Ringelementen 36 die beiden Ringabschnitte 16 des Federkörpers 14, so dass die Ringelemente 36 und das Längsverbindungselement 38 die Stabilität des Federkörpers 14 erhöhen.

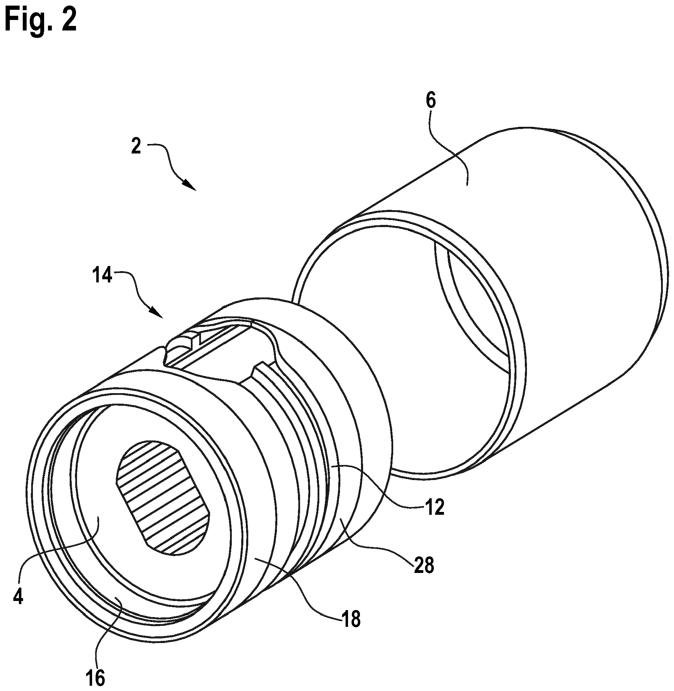

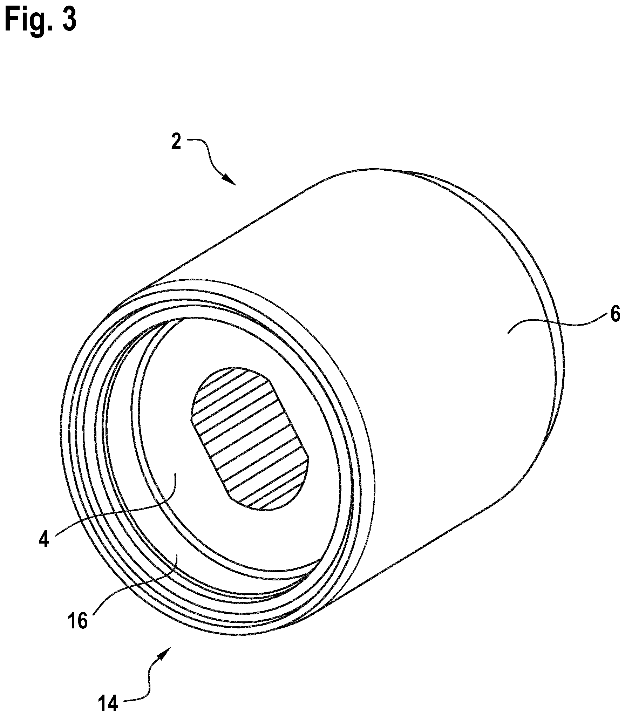

Der sich zwischen den beiden Ringabschnitten 16 erstreckende, zylinderringförmige Raum wird durch zwei in Umfangsrichtung U voneinander beanstandete und sich jeweils zwischen den Ringabschnitten 16 erstreckenden Trennwänden 22 in eine erste Kammer 8 und in eine zweite Kammer 10 aufgeteilt. Die Kammern 8, 10 werden auch als die Blähkammern oder als Arbeitskammern bezeichnet. Radial innenseitige sind die Kammern durch den Federkörper 14 bzw. durch den zugehörigen rohrförmigen Abschnitt 34 begrenzt. Zur radialaußenseitigen Begrenzung der Kammern 8, 10 sind zwei ringabschnittsförmige Kanalelemente 28 vorgesehen. Diese können mantelseitig auf den Federkörper 14 bzw. auf den Stützkäfig 18 aufgesetzt werden, um die Kammern 8, 10 zumindest im Wesentlichen zu schließen. Ist dies erfolgt, kann der erste Stützkörper 4 mit dem Federkörper 14 zu einer Baugruppe zusammen montiert werden, wie sie aus der Figur 2 zu erkennen ist. Diese Baugruppe kann sodann in den zweiten Stützkörper 6 eingeschoben werden. Mit dem Einschieben kann bereits eine Abdichtung erfolgen. Alternativ oder ergänzend kann daraufhin mit einem Presswerkzeug der Durchmesser des Stützkörpers 6 derart zu verkleinern werden, dass eine kraftschlüssige und/oder formschlüssige Verbindung zwischen dem Federkörper 14 und dem zweiten Stützkörper 6 entsteht. In der Figur 3 ist eine entsprechend fertig montierte Hydrobuchse 2 dargestellt.

Aus der Zusammenschau der Figuren 1 und Figur 2 ist zu erkennen, dass von den Kanalelementen 28 ein Drosselkanal 12 in Form einer Nut gebildet wird, dessen radial außenseitige Wand von dem zweiten Stützkörper 6 gebildet ist. Der Drosselkanal 12 kann mehrere Teilkanäle umfassen. Der Drosselkanal 12 verbindet die erste Kammer 8 flüssigkeitsleitend mit der zweiten Kammer 10. Treten nun Kräfte in Radialrichtung R zwischen dem ersten Stützkörper 4 und dem zweiten Stützkörper 6 auf, kann es zu einer Verformung und einem entsprechenden Verändern des Volumens der Kammern 8, 10 kommen. Dies verursacht ein Volumenstrom an Hydraulikflüssigkeit durch den Drosselkanal 12 zwischen den Kammern 8, 10. Durch das Strömen der Hydraulikflüssigkeit durch den Drosselkanal 12 entsteht Dissipation und eine entsprechende Dämpfungsarbeit. Geht mit der Krafteinwirkung zwischen den Stützkörpern 4, 6 eine entsprechende relative Bewegung einher, wird diese durch die zuvor genannte Dämpfungsarbeit gedämpft. Diese Dämpfung ist jedoch nur bis zu einer bestimmten Frequenz oder in einem bestimmten Frequenzbereich, so beispielsweise zwischen 5 Hz und 15 Hz, effektiv. Relative Bewegungen zwischen den Stützkörpern 4, 6 in dem genannten Frequenzbereich werden oftmals als niederfrequente Bewegungen oder niederfrequente Schwingungen bezeichnet. Treten Schwingungen mit einer höheren Frequenz, also höherfrequenten Schwingungen, auf, erfolgt kaum noch ein Austausch von Hydraulikflüssigkeit durch den Drosselkanal 12 zwischen den Kammern 8, 10. Vielmehr tritt ein Sperr-Effekt auf, der aufgrund des geringen Querschnitt des Drosselkanals 12 das Strömen von Hydraulikflüssigkeit mit einer entsprechend hohen Strömungsgeschwindigkeit verhindert.

Um zu verhindern, dass hochfrequente Schwingungen ungehindert zwischen den beiden Stützkörpern 4, 6 übertragen werden, ist es vorgesehen, dass derartige Schwingungen isoliert werden. Erfindungsgemäß ist es dazu vorgesehen, dass sich die Trennwände 22, wie in Figur 5 dargestellt, jeweils zwischen dem ersten Stützkörper 4 und dem Stützkäfig 18 erstrecken. Jede Trennwand 22 ist dazu zwischen jeweils zwei zugehörigen, in Radialrichtung R der Hydrobuchse 2 überlappenden Schlitzen 24, 26 angeordnet. In Radialrichtung R sind die beiden Schlitze 24, 26 und die Trennwand 22 also hintereinander angeordnet. Die beiden Schlitze 24, 26 und die Trennwand 22 erstrecken sich dabei in Umfangsrichtung U oder in Tangentialrichtung T über die jeweils gleiche Erstreckungsbreite E. Dabei ist es vorgesehen, dass jeweils der erste Schlitz 24 der beiden Schlitze 24, 26 von der ersten Kammer 8 und der zweite Schlitz 26 der beiden Schlitze 24, 26 von der zweiten Kammer gebildet ist, oder umgekehrt. Dies gewährleistet, dass die Trennwände 22 jeweils in einem Winkel a zwischen 50 Grad und 87 Grad zu einer Achse in Radialrichtung R ausgerichtet sein können. Die Trennwände 22 erstrecken sich also nicht direkt in Radialrichtung R von dem ersten Stützkörper 4 zu dem Stützkäfig 18. Vielmehr ist es nunmehr möglich, dass sich die Trennwände 22 schräg erstrecken, und zwar vorzugsweise in dem genannten Winkel zwischen 50 Grad und 87 Grad zu einer Querebene Q, die sich in Längsrichtung L und zwischen den gegenüberliegenden Trennwänden 22, also in einer entsprechenden Radialrichtung R, erstreckt.

Durch die schräge Anordnung der Trennwände 22 zwischen dem ersten Stützkörper 4 und dem Stützkäfig 18 können sich die Trennwände 22 jeweils in Umfangsrichtung U oder Tangentialrichtung T über die Erstreckungsbreite E erstrecken. Mit anderen Worten ist es nun möglich, dass sich die Trennwände 22 in Umfangsrichtung U oder in Tangentialrichtung T jeweils über einen Winkel W zwischen 15 Grad und 45 Grad, besonders bevorzugt zwischen 20 Grad und 40 Grad, so beispielsweise über 30 Grad, erstrecken. Durch die entsprechende Erstreckungsbreite E können die Trennwände 22 jeweils in Radialrichtung R und/oder um eine Achse in Längsrichtung L elastisch verbogen werden. Mit dieser Biegsamkeit weisen die Trennwände 22 eine gegenüber aus dem Stand der Technik bekannten Trennwänden geringere Steifigkeit auf, so dass die Trennwände 22 bei einem Auftreten von hochfrequenten Schwingungen membranartig verformbar sind. Die geringe Steifigkeit bewirkt, dass hochfrequente Schwingungen besser isoliert werden als bei Hydrobuchsen mit steiferen Trennwänden. Um die gewünscht niedrigere Biegesteifigkeit der Trennwände 22 zu erreichen, ist es bevorzugt vorgesehen, dass die Erstreckungsbreite E einer jeweiligen Trennwand 22 mindestens dem 1,5-fache, besonders bevorzugt mindestens das 2-fache einer mittleren Wandstärke S der jeweiligen Trennwand 22 beträgt. Die Wandstärke S einer Trennwand 22 bestimmt sich dabei durch die zu erwartenden Druckunterschiede in den Kammern 8, 10. Die Wandstärke S ist dabei so zu wählen, dass die Hydrobuchse 2 bzw. die Trennwände 22 den genannten Druckunterschieden ausreichend sicher standhalten, so dass eine hohe Lebenserwartung der Hydrobuchse zu erwarten ist.

Um eine besonders fluiddichte und/oder sichere Anbindung einer jeden Trennwand 22 an den zweiten Stützkörper 6 zu erreichen, kann zu einer oder jeder Trennwand 22 ein Trennwandergänzungsabschnitt 30 vorgesehen sein. Der jeweilige Trennwandergänzungsabschnitt 30 erstreckt sich dabei in Radialrichtung R von der zugehörigen Trennwand 22 an dem Stützkäfig 18 zu dem zweiten Stützkörper 6.

### Bezugszeichenliste (Teil der Beschreibung)

- A: radialer Abstand
- E: Erstreckungsbreite
- L: Längsrichtung
- Q: Querebene
- R: Radialrichtung
- S: Wandstärke
- T: Tangentialrichtung
- U: Umfangsrichtung
- W: Erstreckungswinkel
- 2: Hydrobuchse
- 4: erster Stützkörper
- 6: zweiter Stützkörper
- 8: erste Kammer
- 10: zweite Kammer
- 12: Drosselkanal
- 14: Federkörper
- 16: Ringabschnitt
- 18: Stützkäfig
- 20: radialaußenseitiges Ende
- 22: Trennwand
- 24: erster Schlitz
- 26: zweiter Schlitz
- 28: Kanalelement
- 30: Trennwandergänzungsabschnitt
- 32: Bohrung
- 34: rohrfömiger Abschnitt
- 36: Ringelement
- 38: Längsverbindungselement

## Patentansprüche

1. Hydrobuchse (2), aufweisend
- einen zylindrischen, ersten Stützkörper (4),
- einen hohlzylindrischen, zweiten Stützkörper (6), der den ersten Stützkörper (4) mit einem radialen Abstand A umschließt,
- eine mit Hydraulikflüssigkeit gefüllte, erste Kammer (8), die zwischen dem ersten Stützkörper (4) und dem zweiten Stützkörper (5) angeordnet ist,
- eine mit Hydraulikflüssigkeit gefüllte, zweite Kammer (10), die zwischen dem ersten Stützkörper (4) und dem zweiten Stützkörper (6) angeordnet ist,
- einen Drosselkanal (12), der die erste Kammer (8) flüssigkeitsleitend mit der zweiten Kammer (10) verbindet,
- einen Federkörper (14), der zwei in Längsrichtung L der Hydrobuchse (2) voneinander beabstandete Ringabschnitte (16) aufweist, die sich jeweils von dem ersten Stützkörper (4) zu dem zweiten Stützkörper (6) erstrecken, um die genannten Stützkörper (4, 6) aufeinander abzustützen,
- einem dem Federkörper (14) zugeordneter, hohlzylindrischer Stützkäfig (18), der die Ringabschnitte (16) des Federkörpers (14) an ihren radial außenseitigen Enden (20) miteinander verbindet, und
- zwei zur Trennung der Kammern (8, 10) ausgebildete Trennwände (22), die sich jeweils zwischen den Ringabschnitten (16) des Federkörpers (14) erstrecken,
**dadurch gekennzeichnet, dass**
- sich die Trennwände (22) jeweils zwischen dem ersten Stützkörper (4) und dem Stützkäfig (18) erstrecken, und
- jede der Trennwände (22) zwischen jeweils zwei in Radialrichtung R der Hydrobuchse (2) überlappenden Schlitzen (24, 26) angeordnet ist, wobei jeweils ein erster Schlitz (24) der beiden Schlitze (24, 26) von der ersten Kammer (8) und ein zweiter Schlitz (26) der beiden Schlitze (24, 26) von der zweiten Kammer (10) gebildet sind.

2. Hydrobuchse (2) nach dem vorhergehenden Anspruch, **dadurch gekennzeichnet, dass** jede der Trennwände (22) Z-förmig oder S-förmig ausgestaltet ist.

3. Hydrobuchse (2) nach einem der vorhergehenden Ansprüche, **dadurch gekennzeichnet, dass** die Trennwände (22) von dem Federkörper (14) gebildet sind.

4. Hydrobuchse (2) nach einem der vorhergehenden Ansprüche, **dadurch gekennzeichnet, dass** der Drosselkanal (12) von dem Federkörper (14) gebildet ist.

5. Hydrobuchse (2) nach dem vorhergehenden Anspruch, **dadurch gekennzeichnet, dass** dem Federkörper (14) zur Bildung des Drosselkanals (12) ringabschnittsförmige Kanalelemente (28) zugeordnet sind.

6. Hydrobuchse (2) nach dem vorhergehenden Anspruch, **dadurch gekennzeichnet, dass** der Stützkäfig (18) die Kanalelemente (28) bildet.

7. Hydrobuchse (2) nach einem der vorhergehenden Ansprüche, **dadurch gekennzeichnet, dass** für mindestens eine oder jede Trennwand (22) ein Trennwandergänzungsabschnitt (30) vorgesehen ist, der sich jeweils von der zugehörigen Trennwand (22) an dem Stützkäfig (18) zu dem zweiten Stützkörper (6) erstreckt.

8. Hydrobuchse (2) nach einem der vorhergehenden Ansprüche 1 bis 6, **dadurch gekennzeichnet, dass** sich die Trennwände (22) jeweils zwischen dem radial innenseitig an dem zweiten Stützkörper (6) angeordneten Stützkäfig (18) und einem radial außenseitig an dem ersten Stützkörper (4) angeordneten Abschnitt des Federkörpers (14) erstrecken.

9. Hydrobuchse (2) nach einem der vorhergehenden Ansprüche, **dadurch gekennzeichnet, dass** sich jede der Trennwände (22) in Umfangsrichtung U der Hydrobuchse (2) über einen Winkel W zwischen 15 Grad und 45 Grad erstreckt.

10. Hydrobuchse (2) nach einem der vorhergehenden Ansprüche, **dadurch gekennzeichnet, dass** ein erster Schlitz (24) und ein zweiter Schlitz (26), zwischen denen eine Trennwand (22) angeordnet ist, in Umfangsrichtung U oder in Tangentialrichtung T der Hydrobuchse (2) über mindestens 25% einer sich in der Umfangsrichtung U bzw. in der Tangentialrichtung T mit einer Erstreckungsbreite E erstreckenden Trennwand (22) überlappend angeordnet sind.

11. Hydrobuchse (2) nach einem der vorhergehenden Ansprüche, **dadurch gekennzeichnet, dass** jede der Trennwände (22) in einem Winkel zwischen 50 Grad und 85 Grad zu einer sich in Längsrichtung L erstreckenden, die jeweilige Trennwand (22) schneidenden Querebene Q der Hydrobuchse (2) ausgerichtet ist.

12. Kraftfahrzeug mit
- einer Karosserie,
- einer Radaufhängung, die mindestens einen Lenker umfasst, und
- einer Hydrobuchse, die eine lagernde Verbindung zwischen dem Lenker und der Karosserie bildet,
**dadurch gekennzeichnet, dass**
- die Hydrobuchse durch eine Hydrobuchse (2) nach einem der vorhergehenden Ansprüche 1 bis 11 ausgebildet ist.

## Claims

1. Hydraulic bushing (2) having
- a cylindrical, first supporting element (4),
- a hollow-cylindrical, second supporting element (6), which encloses the first supporting element (4) with a radial spacing A,
- a first chamber (8), which is filled with hydraulic fluid and is arranged between the first supporting element (4) and the second supporting element (5),
- a second chamber (10), which is filled with hydraulic fluid and is arranged between the first supporting element (4) and the second supporting element (6),
- a throttle channel (12), which fluidically connects the first chamber (8) to the second chamber (10),
- a spring element (14), which has two annular portions (16) spaced apart from one another in the longitudinal direction L of the hydraulic bushing (2), which extend in each case from the first supporting element (4) to the second supporting element (6) in order to support the said supporting elements (4, 6) on one another,
- a hollow-cylindrical supporting cage (18), which is assigned to the spring element (14) and connects the annular portions (16) of the spring element (14) to one another at their radially outer ends (20), and
- two separating walls (22), which are designed to separate the chambers (8, 10) and extend in each case between the annular portions (16) of the spring element (14),
**characterized in that**
- the separating walls (22) extend in each case between the first supporting element (4) and the supporting cage (18), and
- each of the separating walls (22) is arranged between two respective slots (24, 26) overlapping in the radial direction R of the hydraulic bushing (2), in each case a first slot (24) of the two slots (24, 26) being formed by the first chamber (8) and a second slot (26) of the two slots (24, 26) being formed by the second chamber (10).

2. Hydraulic bushing (2) according to the preceding claim, **characterized in that** each of the separating walls (22) is of a Z-shaped or S-shaped configuration.

3. Hydraulic bushing (2) according to one of the preceding claims, **characterized in that** the separating walls (22) are formed by the spring element (14).

4. Hydraulic bushing (2) according to one of the preceding claims, **characterized in that** the throttle channel (12) is formed by the spring element (14).

5. Hydraulic bushing (2) according to the preceding claim, **characterized in that** channel elements (28) in the form of annular portions are assigned to the spring element (14) to form the throttle channel (12) .

6. Hydraulic bushing (2) according to the preceding claim, **characterized in that** the supporting cage (18) forms the channel elements (28).

7. Hydraulic bushing (2) according to one of the preceding claims, **characterized in that**, for at least one or each separating wall (22), there is provided a supplementary separating wall portion (30), which extends in each case from the associated separating wall (22) on the supporting cage (18) to the second supporting element (6).

8. Hydraulic bushing (2) according to one of the preceding Claims 1 to 6, **characterized in that** the separating walls (22) extend in each case between the supporting cage (18) arranged radially inside on the second supporting element (6) and a portion of the spring element (14) arranged radially outside on the first supporting element (4).

9. Hydraulic bushing (2) according to one of the preceding claims, **characterized in that** each of the separating walls (22) extends in the circumferential direction U of the hydraulic bushing (2) over an angle W of between 15 degrees and 45 degrees.

10. Hydraulic bushing (2) according to one of the preceding claims, **characterized in that** a first slot (24) and a second slot (26), between which a separating wall (22) is arranged, are arranged overlapping in the circumferential direction U or in the tangential direction T of the hydraulic bushing (2) over at least 25% of a separating wall (22) extending in the circumferential direction U or in the tangential direction T with a width of extent E.

11. Hydraulic bushing (2) according to one of the preceding claims, **characterized in that** each of the separating walls (22) is aligned at an angle of between 50 degrees and 85 degrees in relation to the transverse plane Q of the hydraulic bushing (2) extending in the longitudinal direction L and intersecting the respective separating wall (22).

12. Motor vehicle with
- a body,
- a wheel suspension, which comprises at least one link, and
- a hydraulic bushing, which forms a bearing connection between the link and the body,
**characterized in that**
- the hydraulic bushing is formed by a hydraulic bushing (2) according to one of the preceding Claims 1 to 11.

## Revendications

1. Manchon hydraulique (2), présentant
- un premier corps d'appui (4) cylindrique,
- un deuxième corps d'appui (6) cylindrique creux qui entoure le premier corps d'appui (4) à une distance radiale A,
- une première chambre (8) remplie de liquide hydraulique, qui est disposée entre le premier corps d'appui (4) et le deuxième corps d'appui (5),
- une deuxième chambre (10) remplie de liquide hydraulique, qui est disposée entre le premier corps d'appui (4) et le deuxième corps d'appui (6),
- un conduit d'étranglement (12) qui relie la première chambre (8) à la deuxième chambre (10) de manière à permettre le passage de liquide,
- un corps élastique (14) présentant deux parties annulaires (16) espacées l'une de l'autre dans la direction longitudinale L du manchon hydraulique (2), qui s'étendent respectivement du premier corps d'appui (4) au deuxième corps d'appui (6) pour appuyer lesdits corps d'appui (4, 6) l'un sur l'autre,
- une cage d'appui (18) cylindrique creuse, associée au corps élastique (14), qui relie les parties annulaires (16) du corps élastique (14) l'une à l'autre au niveau de leurs extrémités (20) radialement extérieures, et
- deux parois de séparation (22) réalisées pour séparer les chambres (8, 10), qui s'étendent respectivement entre les parties annulaires (16) du corps élastique (14),
**caractérisé en ce que**
- les parois de séparation (22) s'étendent respectivement entre le premier corps d'appui (4) et la cage d'appui (18), et
- chacune des parois de séparation (22) est disposée entre respectivement deux fentes (24, 26) qui se recouvrent dans la direction radiale R du manchon hydraulique (2), respectivement une première fente (24) des deux fentes (24, 26) étant formée par la première chambre (8) et une deuxième fente (26) des deux fentes (24, 26) étant formée par la deuxième chambre (10).

2. Manchon hydraulique (2) selon la revendication précédente, **caractérisé en ce que** chacune des parois de séparation (22) est configurée en forme de Z ou en forme de S.

3. Manchon hydraulique (2) selon l'une quelconque des revendications précédentes, **caractérisé en ce que** les parois de séparation (22) sont formées par le corps élastique (14).

4. Manchon hydraulique (2) selon l'une quelconque des revendications précédentes, **caractérisé en ce que** le conduit d'étranglement (12) est formé par le corps élastique (14).

5. Manchon hydraulique (2) selon la revendication précédente, **caractérisé en ce que** des éléments de conduit (28) en forme de parties annulaires sont associés au corps élastique (14) pour former le conduit d'étranglement (12).

6. Manchon hydraulique (2) selon la revendication précédente, **caractérisé en ce que** la cage d'appui (18) forme les éléments de conduit (28).

7. Manchon hydraulique (2) selon l'une quelconque des revendications précédentes, **caractérisé en ce que** pour au moins une ou chaque paroi de séparation (22) une partie de complément de paroi de séparation (30) est prévue qui s'étend respectivement depuis la paroi de séparation associée (22) sur la cage d'appui (18) jusqu'au deuxième corps d'appui (6).

8. Manchon hydraulique (2) selon l'une quelconque des revendications précédentes 1 à 6, **caractérisé en ce que** les parois de séparation (22) s'étendent respectivement entre la cage d'appui (18) disposée radialement côté intérieur sur le deuxième corps d'appui (6) et une partie du corps élastique (14), disposée radialement côté extérieur sur le premier corps d'appui (4).

9. Manchon hydraulique (2) selon l'une quelconque des revendications précédentes, **caractérisé en ce que** chacune des parois de séparation (22) s'étend dans la direction circonférentielle U du manchon hydraulique (2) selon un angle W compris entre 15 degrés et 45 degrés.

10. Manchon hydraulique (2) selon l'une quelconque des revendications précédentes, **caractérisé en ce qu'**une première fente (24) et une deuxième fente (26), entre lesquelles une paroi de séparation (22) est disposée, sont disposées en recouvrement dans la direction circonférentielle U ou dans la direction tangentielle T du manchon hydraulique (2) sur au moins 25 % d'une paroi de séparation (22) s'étendant dans la direction circonférentielle U ou dans la direction tangentielle T sur une largeur d'étendue E.

11. Manchon hydraulique (2) selon l'une quelconque des revendications précédentes, **caractérisé en ce que** chacune des parois de séparation (22) est orientée selon un angle compris entre 50 degrés et 85 degrés par rapport à un plan transversal Q du manchon hydraulique (2) coupant la paroi de séparation (22) respective et s'étendant dans la direction longitudinale L.

12. Véhicule automobile, comprenant
- une carrosserie,
- une suspension de roue comprenant au moins une bielle, et
- un manchon hydraulique formant un raccordement de palier entre la bielle et la carrosserie,
**caractérisé en ce que**
- le manchon hydraulique est réalisé par un manchon hydraulique (2) selon l'une quelconque des revendications 1 à 11.
